(19) **Europäisches Patentamt / European Patent Office / Office européen des brevets**

(11) **EP 2 811 782 A1**

(12) # EUROPEAN PATENT APPLICATION
published in accordance with Art. 153(4) EPC

(43) Date of publication:
**10.12.2014 Bulletin 2014/50**

(21) Application number: **12867496.7**

(22) Date of filing: **13.11.2012**

(51) Int Cl.:
***H04W 36/00*** *(2009.01)*

(86) International application number:
**PCT/CN2012/084498**

(87) International publication number:
**WO 2013/113230 (08.08.2013 Gazette 2013/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.02.2012 CN 201210023347**

(71) Applicant: **Huawei Technologies Co., Ltd Shenzhen, Guangdong 518129 (CN)**

(72) Inventors:
• **LI, Bingzhao Shenzhen Guangdong 518129 (CN)**
• **CHEN, Yanyan Shenzhen Guangdong 518129 (CN)**

(74) Representative: **Körber, Martin Hans Mitscherlich PartmbB Patent- und Rechtsanwälte Sonnenstrasse 33 80331 München (DE)**

(54) **METHOD AND TERMINAL FOR DATA TRANSMISSION**

(57) The present invention discloses a method for sending data. A cell virtual set is established directly or according to signal metric values of neighboring cells in a cell forward access channel state, where the cell virtual set includes at least a serving cell; a common relative grant channel of non-serving cells in the cell virtual set is monitored, and instruction information in the common relative grant channel is read; power for sending data to be sent is adjusted according to the read instruction information, and the data to be sent is sent by using the adjusted power. Embodiments of the present invention also disclose a method for cell reselection and provide a terminal thereof. With the technical solution of the present invention, because a cell virtual set is established directly or according to signal metric values of neighboring cells in a cell forward access channel state, interference on neighboring cells can be reduced.

A terminal establishes a cell virtual set directly or according to signal metric values of neighbor cells in a cell forward access channel state — 101

The terminal monitors a common relative grant channel of non-serving cells in the cell virtual set, and reads instruction information in the common relative grant channel — 102

The terminal adjusts, according to the read instruction information, power for sending data to be sent, and sends the data to be sent by using the adjusted power — 103

FIG. 1

EP 2 811 782 A1

**Description**

This application claims priority to the Chinese Patent Application No. 201210023347.9, filed with the Chinese Patent Office on February 2, 2012 and entitled "METHOD FOR SENDING DATA AND TERMINAL THEREOF", which is incorporated herein by reference in its entirety.

**TECHNICAL FIELD**

The present invention relates to the field of communication technologies, and in particular, to a method for sending data and a terminal thereof.

**BACKGROUND**

In a wideband code division multiple access (WCDMA, Wideband Code Division Multiple Access) system, a terminal in a cell dedicated channel (Cell DCH, Cell Dedicated Channel) state has almost been in a soft handover state. Soft handover is a handover mode in which when a terminal is handed over from one cell to another cell, the terminal sets up communication with a new base station firstly and does not disconnect the communication from an original base station until a signal received from the original base station is smaller than a threshold value. The terminal in the soft handover state maintains communications with multiple base stations or cells at the same time. These cells form an active set of the terminal, and all cells in the active set are intra-frequency cells. With movement of the terminal, the quality of communications between the terminal and each base station changes frequently. To ensure the quality of received signals of the terminal, the active set of the terminal needs also to be updated accordingly, that is, cells with relatively poor signal quality in the active set are deleted from the active set, whereas cells with a relatively good signal quality outside the active set are added to the active set. The maintenance of the active set needs to be reported and measured by a UE, and an RNC maintains the active set according to a measurement result. Common active set maintenance events are as follows: (1) A cell with good enough signal quality is actively added to the active set; (2) A cell with poor signal quality is deleted from the active set; (3) The quality of a cell outside the active set is better than the quality of a cell in the active set; when the active set reaches a preset quantity, the cell with poor signal quality in the active set is replaced with the cell with good signal quality outside the active set.

In the Cell DCH state, the active set exists on only an intra-frequency frequency point, and a virtual active set is configured on an inter-frequency frequency point. The terminal configured with the inter-frequency virtual active set maintains a virtual inter-frequency active set on measured inter-frequency frequency points by inheriting active set update rules for intra-frequency measurement, for example, update rules (1), (2), and (3). When virtual active set measurement events are triggered, the UE does not report a measurement result to a network side, but updates the active set internally by using these events and does not report the update result to the network side. When deciding an inter-frequency event, the comprehensive quality of the virtual active set is compared with the quality of an intra-frequency serving cell to perform handover decision.

During the research and practice of the prior art, the inventor of the present invention discovers that in a cell forward access channel (Cell FACH, Cell Forward Access Channel) state, the terminal does not maintain the active set, but keeps connection with the serving cell; in this way, when the terminal works in the Cell FACH state, a neighboring cell is not taken into consideration, which causes interference on the neighboring cells.

**SUMMARY**

Multiple aspects of the present invention provide a method for sending data, a method for cell reselection, and a terminal, to establish and use a cell virtual set in a cell forward access channel state, so that when a terminal works in the cell forward access channel state, the terminal can reduce interference on neighboring cells.

A method for sending data includes:

establishing a cell virtual set directly or according to signal metric values of neighboring cells in a cell forward access channel state, where the cell virtual set includes at least a serving cell;

monitoring a common relative grant channel of non-serving cells in the cell virtual set, and reading instruction information in the common relative grant channel; and

adjusting, according to the read instruction information, power for sending data to be sent, and sending the data to be sent by using the adjusted power.

A method for cell reselection includes:

establishing a cell virtual set directly or according to signal metric values of neighboring cells in a cell forward access channel state, where the cell virtual set includes at least a serving cell;

reading system information broadcasts of cells in the cell virtual set, and storing the system information broadcasts; and

performing cell reselection according to the cell virtual set and the stored system information broadcasts of the cells in the cell virtual set.

A terminal includes:

a first virtual set establishing unit, configured to establish a cell virtual set directly or according to signal metric values of neighboring cells in a cell forward access channel state;

a monitoring unit, configured to monitor a common relative grant channel of non-serving cells in the cell virtual set established by the first virtual set establishing unit;

a first reading unit, configured to read instruction information in the common relative grant channel monitored by the monitoring unit;

an adjusting unit, configured to adjust power for sending data to be sent according to the instruction information read by the first reading unit; and

a sending unit, configured to send the data to be sent by using the power adjusted by the adjusting unit.

A terminal includes:

a second virtual set establishing unit, configured to establish a cell virtual set directly or according to signal metric values of neighboring cells in a cell forward access channel state;

a second reading unit, configured to read system information broadcasts of cells in the cell virtual set established by the second virtual set establishing unit;

a storing unit, configured to store the system information broadcasts read by the second reading unit; and

a reselecting unit, configured to perform cell reselection according to the cell virtual set established by the second virtual set establishing unit and the system information broadcasts stored by the storing unit.

By using the technical solutions described in the foregoing multiple aspects, interference caused by the terminal on neighboring cells can be avoided.

**BRIEF DESCRIPTION OF DRAWINGS**

FIG. 1 is a schematic diagram of an embodiment of a method for sending data according to an embodiment of the present invention;

FIG. 2 is a schematic diagram of an embodiment of a method for sending cell reselection according to an embodiment of the present invention;

FIG. 3 is a schematic diagram of an embodiment of a terminal according to an embodiment of the present invention;

FIG. 4 is a schematic diagram of another embodiment of a terminal according to an embodiment of the present invention;

FIG. 5 is a schematic diagram of another embodiment of a terminal according to an embodiment of the present invention; and

FIG. 6 is a schematic diagram of another embodiment of a terminal according to an embodiment of the present invention.

## DESCRIPTION OF EMBODIMENTS

To help understand the present invention thoroughly, such specific details as the specific system structure, interface, and technology are hereinafter described, which are intended to illustrate rather than limit the present invention. However, those skilled in the art should clearly understand that the present invention may also be implemented in other embodiments without such specific details. In other cases, details about well-known apparatuses, circuits, and methods are omitted to avoid affecting the description of the present invention by unnecessary details.

The technology described in the specifications can be applied in various communication systems, including current 2G and 3G communication systems and next generation communication systems, for example, a global system for mobile communications (GSM, Global System for Mobile communications), a code division multiple access (CDMA, Code Division Multiple Access) system, a time division multiple access (TDMA, Time Division Multiple Access) system, a wideband code division multiple access wireless (WCDMA, Wideband Code Division Multiple Access Wireless) system, a frequency division multiple addressing (FDMA, Frequency Division Multiple Addressing) system, an orthogonal frequency-division multiple access (OFDMA, Orthogonal Frequency-Division Multiple Access) system, a single carrier FDMA (SC-FDMA) system, a general packet radio service (GPRS, General Packet Radio Service) system, a long term evolution (LTE, Long Term Evolution) system, and other similar communication systems.

Various aspects are described in the specification with reference to a user equipment and/or a base station and/or a base station controller.

The user equipment refers to a wireless terminal, where the wireless terminal may be a device providing a user with speech and/or data connectivity, a handheld device with the wireless connection function, or other processing devices connected to a wireless modem. The wireless terminal may communicate with one or multiple core networks over a radio access network (for example, RAN, Radio Access Network), and the wireless terminal may be a mobile terminal, for example, a mobile phone (or called cellular phone) and a computer having a mobile terminal. For example, the mobile terminal may be a portable, pocket, handheld, computer built-in, or car-mounted mobile device that exchanges speech and/or data with the radio access network, such as, a personal communication service (PCS, Personal Communication Service) phone, a cordless phone, a session initialization protocol (SIP) handset, a wireless local loop (WLL, Wireless Local Loop) station, a personal digital assistant (PDA, Personal Digital Assistant), and the like. The wireless terminal may also be called a system, a subscriber unit (Subscriber Unit), a subscriber station (Subscriber Station), a mobile station (Mobile Station), a mobile (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, the access point) may refer to a device on the access network that communicates with the wireless terminal over the air interface by using one or multiple sectors. The base station may be configured to perform conversion between received air frames and IP packets and act as a router between the wireless terminal and other parts of the access network, where the other parts of the access network may include an Internet Protocol (IP) network. The base station may also coordinate attribute management of the air interfaces. For example, the base station may be a base station (BTS, base transceiver station) in GSM or CDMA, a base station (NodeB) in WCDMA, or an evolved base station (NodeB, or eNB, or e-NodeB, evolutional Node B) in LTE, which is not limited by the present invention.

The base station controller may be a base station controller (BSC, base station controller) in GSM or CDMA, or a radio network controller (RNC, Radio Network Controller) in WCDMA, which is not limited by the present invention.

In addition, terms "system" and "network" in the specifications may be interchanged. The term "and/or" in the specification merely describes an association relationship between associating objects, indicating that three types of relationships may exist, for example, A and/or B may indicate that A exists independently, A and B exist concurrently, and B exists independently. In addition, the character "/" in the specifications generally indicate an "or" relationship between associated objects.

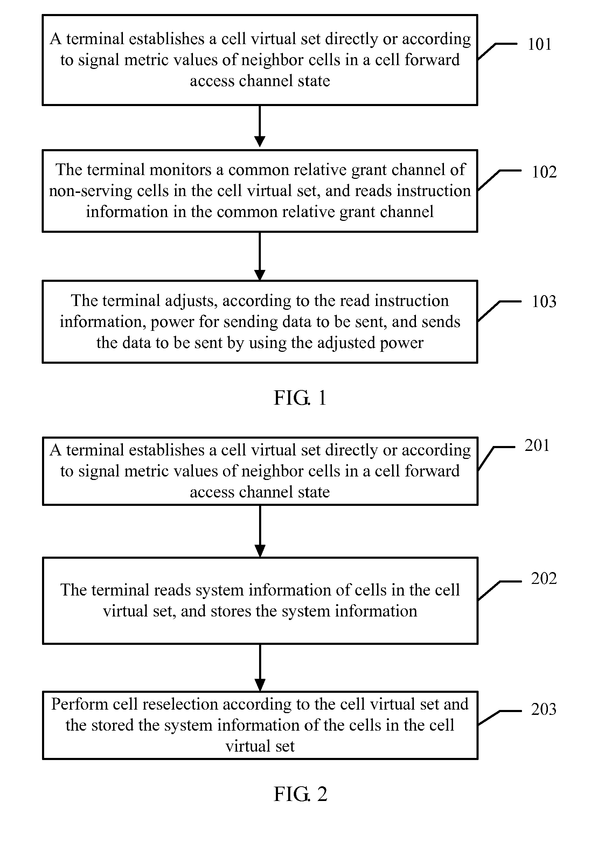

FIG. 1 is a schematic flowchart of a method for sending data according to an embodiment of the present invention.

101. A terminal establishes a cell virtual set directly or according to signal metric values of neighboring cells in a cell forward access channel state.

The establishing, by a terminal, a cell virtual set directly in a cell forward access channel state refers to the following: After detecting signals of a serving cell and neighboring cells, the terminal adds all measured cells to the cell virtual set, where the cell virtual set includes at least a serving cell.

A signal metric value may be signal quality, signal strength, an S value or an R value corresponding to a cell, where the S value includes signal strength S value Srxlev and signal quality S value Squal. The calculation formula of the R value depends on whether the cell is a serving cell or a neighboring cell, which is specifically as follows:

$$Srxlev = Qrxlevmeas - Qrxlevmin - Pcompensation;$$

In the above formula, Qrxlevmeas indicates receive power of a measured current serving cell and refers to an RSCP value of a P-CCPCH channel; Qrxlevmin indicates minimum receive power of the serving cell, which is read from a system broadcast message of the serving cell and generally needs to experience a specific arithmetic conversion after this parameter is read by the terminal; Pcompensation indicates a compensation value.

$$Squal = Qqualmeas - Qqualmin;$$

In the above formula, Qqualmeas indicates a quality level value of a measured cell; Qqualmin indicates a minimum quality level value needed by the serving cell.

$$Rs = Qmeans,s + Qhyst,s + Qoffmbms;$$

$$Rn = Qmeans,n + Qoffset,n + Qoffmbms - TO\ nx(1 - Ln);$$

In the above formulas, Rs indicates the R value of the serving cell, Rn indicates the R value of a neighboring cell, Qmeans,s indicates a measured value of the serving cell, Qmeans,n identifies a measured value of the neighboring cell, Qhyst,s indicates a hysteresis, Qoffset,n indicates an offset between the serving cell and the neighboring cell, and Qoffmbms indicates an offset.

After starting measurement in the cell forward access channel state, the terminal calculates the S value and the R value according to the foregoing formulas. Actually, this belongs to the prior art, and is not further described herein.

Because the serving cell must join the cell virtual set, the signal metric value of the serving cell cannot be considered. When a preset threshold is set for cells joining the cell virtual set, the establishing a cell virtual set according to signal metric values of neighboring cells includes: comparing signal metric values of neighboring cells with the preset threshold, and adding neighboring cells whose signal metric values are greater than the preset threshold to the cell virtual set.

In another embodiment of the present invention, when no preset threshold is set and the quantity of cells joining the virtual set is not limited, all cells measured by the terminal can be added to the cell virtual set.

In another embodiment of the present invention, when a preset quantity of cells joining the virtual set is configured and the configured preset quantity is greater than or equal to the quantity of measured cells, all measured cells are added to the cell virtual set.

In another embodiment of the present invention, when the preset quantity configured for the cell virtual set is smaller than the quantity of measured cells, neighboring cells are sorted according to the signal metric values; the serving cell and neighboring cells with the greatest signal metric values are added to the cell virtual set, where the quantity of neighboring cells is smaller than the preset quantity. For example, if the preset quantity configured for the cell virtual set is five, when it is detected that there are one serving cell and seven neighboring cells, the neighboring cells are sorted according to the signal metric values and the serving cell and four neighboring cells are added to the cell virtual set. Certainly, the quantity of neighboring cells may be 4, and may also be 1, 2, or 3.

The cell virtual set provided in the embodiment of the present invention is a cell set established by the terminal in a cell forward access channel (Cell FACH, Cell Forward Access Channel) state. When no preset quantity and no preset threshold are set, the cell virtual set provided in the embodiment of the present invention is a set of all cells detected by the terminal; when a preset quantity is set and the preset quantity is greater than or equal to the quantity of measured cells, the cell virtual set provided in the embodiment of the present invention is a set of all cells detected by the terminal; when a preset quantity is set and the quantity of measured cells is greater than a preset threshold, the cell virtual set provided in the embodiment of the present invention is a set of the serving cell and neighboring cells with the greatest signal metric values, where the quantity of neighboring cells is smaller than the preset quantity; when a preset threshold is set, the cell virtual set provided in the embodiment of the present invention is a set of the serving cell and neighboring cells whose signal metric values are greater than the preset threshold. Neighboring cells joining the cell virtual set may be intra-frequency neighboring cells or inter-frequency neighboring cells of the serving cell, or inter-system neighboring cells.

After the cell virtual set is established, because signal metric values of the cells in the cell virtual set may change at any time, to ensure that the signal metric values of the cells in the cell virtual set are best enough, the cells in the virtual set need to be updated. Updating the cells in the virtual set needs to follow specific update rules, where the update rules generally include adding, deleting or replacing cells. Details are as follows.

In an embodiment of the present invention, a preset threshold is set for cells joining the cell virtual set; when a signal metric value of a first cell outside the cell virtual set is always greater than the preset threshold within a preset time, the first cell is added to the cell virtual set; when a second cell in the virtual set is always smaller than the preset threshold within the preset time, the second cell smaller than the preset threshold is deleted from the virtual set.

In another embodiment of the present invention, no preset threshold is set for cells joining the virtual set, and cells in the virtual set may be updated by using a weighted average value of the cells in the virtual set. The weighted average value is calculated by using a formula below:

$$T = W * S1 + (1 - W) * S2$$

T indicates the weighted average value, W indicates a weighted parameter, S 1 and S2 indicate signal metric values of two cells in the virtual set. For example, S 1 indicates the signal quality of the serving cell, and S2 indicates a mean value of signal quality of non-serving cells. If S 1 = 1, the threshold is only affected by the S 1 signal.

In another embodiment of the present invention, no preset threshold is set for cells joining the cell virtual set; when the signal metric value of a cell outside the virtual set is always greater than the weighted average value of the cells in the virtual set within a preset time, the cell outside the virtual set is added to the cell virtual set.

In another embodiment of the present invention, when a cell in the cell virtual set is always smaller than the weighted average value of the cells in the cell virtual set within a preset time, the cell smaller than the preset threshold is deleted from the virtual set.

In another embodiment of the present invention, when the cell virtual set reaches a preset quantity and the quantity of cells in the cell virtual set reaches the preset quantity, if the signal metric value of a first cell outside the cell virtual set is always greater than the signal metric value of a second cell in the cell virtual set within a preset time, the second cell in the virtual set is replaced with the first cell, where the second cell is a cell with the smallest signal metric value in the virtual set.

Configuration parameters used by the terminal such as a preset threshold, a preset time, a preset quantity, and preset weight values of each cell in the virtual set are configured by a radio network controller for the terminal, and the terminal receives the configuration parameters from the radio network controller.

102. The terminal monitors a common relative grant channel of non-serving cells in the cell virtual set, and reads instruction information in the common relative grant channel.

The common relative grant channel (C-RGCH, Common Relative Grant Channel) is a common channel between the serving cell and all non-serving cells joining the cell virtual set. After a non-serving cell suffers interference, the non-serving cell can send instruction information to the common relative grant channel; because the terminal keeps monitoring the common relative grant channel, the terminal can read the instruction information in the common relative grant channel.

103. The terminal adjusts, according to the read instruction information, power for sending data to be sent, and sends the data to be sent by using the adjusted power.

The instruction information read by the terminal is sent by neighboring cells, and is generally instruction information requiring the terminal to reduce the transmit power; after reading the instruction information in the common relative grant channel, the terminal adjusts the power for sending data to be sent according to the instruction of the instruction information, and then sends the data to be sent by using the adjusted power. In this way, interference on neighboring cells can be effectively avoided.

The terminal has transmit power to send data, and can adjust the transmit power. When reading, in the common relative grant channel, instruction information of reducing the power for sending data, the terminal reduces the power for sending data to be sent according to the instruction information. If the terminal still reads instruction information of reducing the power for sending data after the power is reduced, the terminal further reduces the transmit power while ensuring that the data to be sent can be effectively sent to a receiver, so that interference on neighboring cells is avoided.

In the embodiment of the present invention, a cell virtual set is established according to signal metric values of neighboring cells in a cell forward access channel state; a common relative grant channel of non-serving cells in the cell virtual set is monitored, and instruction information in the common relative grant channel is read; power for sending data to be sent is adjusted according to the read instruction information, and the data to be sent is sent by using the adjusted power. By using the method for sending data provided in the embodiment of the present invention, in a cell forward access channel state, a common relative grant channel of neighboring cells is monitored; and the sending of data is controlled according to instruction information of the common relative grant channel of neighboring cells. Compared with the prior art, the embodiment of the present invention can avoid interference that the terminal imposes on neighboring cells.

In another embodiment of the present invention, when a report condition is met, the terminal reports the virtual set to a network side device, for example, a radio network controller (RNC, Radio Network Controller), where the report condition includes at least one of the following:

A. When the terminal sends any message to the network side, for example, the terminal sends a measurement report cell update or UMTS terrestrial radio access network (UTRAN, UMTS Terrestrial Radio Access Network) registration area update message or uplink direct transfer signaling, the message sent by the terminal carries virtual set information of the terminal in the FACH state.

B. The terminal receives a cell virtual set report request from the network side, where the cell virtual set report request message may be a radio resource control (RRC, Radio Resource Control) message.

C. The interference level of any one cell in the cell virtual set reaches a specified interference level value, and the terminal discovers the interference level value of the serving cell or a neighboring cell by reading a system broadcast message, where the specified interference level value is a threshold. When the interference level value of the serving cell or the interference level value of the neighboring cell exceeds the threshold, the terminal reports the cell virtual set to the radio network controller.

D. A predefined report condition. The predefined report condition may be as follows: (a) Inter-system or inter-frequency cells are added to the virtual set; or (b) Reporting periodically, reporting once at a certain interval, and the like.

When any one of the foregoing A, B, C, and D is met, the terminal reports the cell virtual set to a network side device, for example, the radio network controller.

After receiving the cell virtual set, the radio network controller (RNC, Radio Network Controller) can use the cell virtual set as a reference for establishing an active set by the RNC when the terminal is handed over to the Cell DCH state. The terminal in the Cell DCH state maintains communications with multiple cells at the same time. A set of these cells that maintain communications with the terminal is called an active set. After receiving the cell virtual set reported by the terminal, the RNC knows that there are four cells in the cell virtual set, including one serving cell A and three neighboring cells B, C, and D. If the RNC decides to hand over the terminal from the Cell FACH state to the Cell DCH state, the RNC needs to establish an active set for the terminal; and the RNC uses the cells in the cell virtual set as cells for establishing the active set and provide these cells to the terminal for use.

When the terminal leaves the Cell FACH state and is handed over to the Cell DCH state or after the terminal releases the uplink connection in the Cell FACH state, the terminal clears the cell virtual set.

Actually, reporting the cell virtual set may also be independent of the process of sending data. After establishing a cell virtual set in the Cell FACH state, the terminal can report the cell virtual set to the network side device as a reference for the network side device to decide to hand over the terminal from the cell forward access channel state to the cell dedicated channel state.

FIG. 2 is a schematic flowchart of a method for cell reselection according to another embodiment of the present invention.

201. A terminal establishes a cell virtual set directly or according to signal metric values of neighboring cells in a cell forward access channel state.

The establishing, by a terminal, a cell virtual set directly in a cell forward access channel state refers to the following: After the terminal detects signals of a serving cell and neighboring cells, the terminal adds all measured cells to the cell virtual set, where the cell virtual set includes at least the serving cell.

A signal metric value may be signal quality, signal strength, an S value or an R value corresponding to a cell, where the S value includes signal strength S value Srxlev and signal quality S value Squal. The calculation formula of the R value depends on whether the cell is a serving cell or a neighboring cell, which is specifically as follows:

$$Srxlev = Qrxlevmeas - Qrxlevmin - Pcompensation;$$

In the above formula, Qrxlevmeas indicates receive power of a measured current serving cell and indicates an RSCP value of a P-CCPCH channel; Qrxlevmin indicates minimum receive power of the serving cell, which is read from a system broadcast message and needs to experience a certain arithmetic conversion after this parameter is read by the terminal; Pcompensation indicates a compensation value.

$$Squal = Qqualmeas - Qqualmin;$$

In the above formula, Qqualmeas indicates a quality level value of a measured cell; Qqualmin indicates a minimum quality level value needed by the serving cell.

$$Rs = Qmeans,s + Qhyst,s + Qoffmbms;$$

$$Rn = Qmeans,n + Qoffset,n + Qoffmbms - TO nx (1 - Ln);$$

In the above formula, Rs indicates the R value of the serving cell, Rn indicates the R value of a neighboring cell, Qmeans,s indicates a measured value of the serving cell, Qmeans,n identifies a measured value of the neighboring cell, Qhyst,s indicates a hysteresis, Qoffset,n indicates an offset between the serving cell and the neighboring cell, and Qoffmbms indicates an offset.

After starting measurement in the cell forward access channel state, the terminal calculates the S value and the R value according to the foregoing formulas. Actually, this belongs to the prior art, and is not further described herein.

Because the serving cell must join the cell virtual set, the signal metric value of the serving cell cannot be considered. When a preset threshold is set for cells joining the cell virtual set, the establishing a cell virtual set according to signal metric values of neighboring cells includes: comparing signal metric values of neighboring cells with the preset threshold, and adding neighboring cells whose signal metric values are greater than the preset threshold to the cell virtual set.

In another embodiment of the present invention, when no preset threshold is set and the quantity of cells joining the virtual set is not limited, all cells measured by the terminal can be added to the cell virtual set.

In another embodiment of the present invention, when a preset quantity of cells joining the virtual set is configured and the configured preset quantity is greater than or equal to the quantity of measured cells, all measured cells are added to the cell virtual set.

In another embodiment of the present invention, when the preset quantity configured for the cell virtual set is smaller than the quantity of measured cells, neighboring cells are sorted according to the signal metric values; the serving cell and neighboring cells with the greatest signal metric values are added to the cell virtual set, where the quantity of neighboring cells is smaller than the preset quantity. For example, if the preset quantity configured for the cell virtual set is 5, when it is detected that there are one serving cell and seven neighboring cells, the neighboring cells are sorted according to the signal metric values and the serving cell and four neighboring cells are added to the cell virtual set. Certainly, the quantity of neighboring cells may be 4, and may also be 1, 2, or 3.

The cell virtual set provided in the embodiment of the present invention is a cell set established by the terminal in a cell forward access channel (Cell FACH, Cell Forward Access Channel) state. When no preset quantity and no preset threshold are set, the cell virtual set provided in the embodiment of the present invention is a set of all cells detected by the terminal; when a preset quantity is set and the preset quantity is greater than or equal to the quantity of measured cells, the cell virtual set provided in the embodiment of the present invention is a set of all cells detected by the terminal; when a preset quantity is set and the quantity of measured cells is greater than a preset threshold, the cell virtual set provided in the embodiment of the present invention is a set of the serving cell and neighboring cells with the greatest signal metric values, where the quantity of neighboring cells is smaller than the preset quantity; when a preset threshold is set, the cell virtual set provided in the embodiment of the present invention is a set of the serving cell and neighboring cells whose signal metric values are greater than the preset threshold. Neighboring cells joining the cell virtual set may be intra-frequency neighboring cells or inter-frequency neighboring cells of the serving cell, or inter-system neighboring cells.

After the cell virtual set is established, because signal metric values of the cells in the cell virtual set may change at any time, to ensure that the signal metric values of the cells in the cell virtual set are best enough, the cells in the virtual set need to be updated. Updating the cells in the virtual set needs to follow specific update rules, where the update rules generally include adding, deleting or replacing cells. Details are as follows.

In an embodiment of the present invention, a preset threshold is set for cells joining the cell virtual set; when a signal metric value of a first cell outside the cell virtual set is always greater than the preset threshold within a preset time, the first cell is added to the cell virtual set; when a second cell in the virtual set is always smaller than the preset threshold within the preset time, the second cell smaller than the preset threshold is deleted from the virtual set.

In another embodiment of the present invention, no preset threshold is set for cells joining the virtual set, and cells in the virtual set may be updated by using a weighted average value of the cells in the virtual set. The weighted average value is calculated by using a formula below:

$$T = W * S1 + (1 - W) * S2$$

T indicates the weighted average value, W indicates a weighted parameter, S 1 and S2 indicate signal metric values of two cells in the virtual set. For example, S 1 indicates the signal quality of the serving cell, and S2 indicates a mean value of signal quality of non-serving cells. If S 1 = 1, the threshold is only affected by the S 1 signal.

In another embodiment of the present invention, no preset threshold is set for cells joining the cell virtual set. When the signal metric value of a cell outside the virtual set is always greater than the weighted average value of the cells in the virtual set within a preset time, the cell outside the virtual set is added to the cell virtual set.

In another embodiment of the present invention, when a cell in the cell virtual set is always smaller than the weighted average value of the cells in the cell virtual set within a preset time, the cell smaller than the preset threshold is deleted from the virtual set.

In another embodiment of the present invention, when the cell virtual set reaches a preset quantity and the quantity of cells in the cell virtual set reaches the preset quantity, if the signal metric value of a first cell outside the cell virtual set is always greater than the signal metric value of a second cell in the cell virtual set within a preset time, the second cell in the virtual set is replaced with the first cell, where the second cell is a cell with the smallest signal metric value in the virtual set.

Configuration parameters used by the terminal such as a preset threshold, a preset time, a preset quantity, and preset weight values of each cell in the virtual set are configured by a radio network controller for the terminal, and the terminal receives the configuration parameters from the radio network controller.

202. The terminal reads a system information broadcast of cells in the cell virtual set, and stores the system information broadcast.

The system information broadcast indicates which cells in the cell virtual set are barred cells or reserved cells. After reading the system information broadcast, the terminal can remove the barred cells or reserved cells in the virtual set from the virtual set or set an access barred flag for the barred cells or reserved cells in the virtual set.

Because the system information broadcast always change, the terminal needs to read the system information broadcast periodically, so that the stored system information broadcast is consistent with the latest broadcast message of cells in the virtual set.

203. The terminal performs cell reselection according to the cell virtual set and the stored system information broadcast of the cells in the cell virtual set.

When the terminal performs cell reselection, the terminal uses the cells in the virtual set as candidate cells of a reselected target cell, and reselects to a cell in the virtual according to the foregoing reselection criterion (S criterion and R criterion); when the system information broadcast indicates that there are reserved cells or barred cells in the virtual set, the terminal excludes the reserved cells or barred cells during the reselection according to the indication of the system information broadcast.

In another embodiment of the present invention, when cells in the cell virtual set is configured with an access barred flag, the cells configured with the access barred flag need to be excluded before the cell reselection, and therefore these cells configured with the access barred flag will not serve as a target cell; and then remaining cells are sorted according to the reselection parameter, and a neighboring cell with the greatest reselection parameter value is selected as the target cell, and the serving cell is handed over to the target cell.

By using the method for cell reselection provided in the embodiment of the present invention, a cell virtual set is established directly or according to signal metric values of neighboring cells in a cell forward access channel state; a system information broadcast of cells in the cell virtual set is read and stored; and cell reselection is performed according to the cell virtual set and the stored system information broadcast of the cells in the cell virtual set. After a terminal is handed over from the serving cell to a target cell, interference on the neighboring cells can be avoided. In addition, the cell reselection can be sped up.

In another embodiment of the present invention, when a report condition is met, the terminal reports the virtual set to a network side device, for example, a radio network controller (RNC, Radio Network Controller), where the report condition includes at least one of the following:

A. When the terminal sends any message to the network side, for example, the terminal sends a measurement report cell update or UMTS terrestrial radio access network (UTRAN, UMTS Terrestrial Radio Access Network) registration area update message or uplink direct transfer signaling, the message sent by the terminal carries virtual set information of the terminal in the FACH state.

B. The terminal receives a cell virtual set report request from the network side, where the cell virtual set report request message may be a radio resource control (RRC, Radio Resource Control) message.

C. The interference level of any one cell in the cell virtual set reaches a specified interference level value, and the terminal discovers the interference level value of the serving cell or a neighboring cell by reading system broadcast messages, where the specified interference level value is a threshold; when the interference level value of the serving cell or the interference level value of the neighboring cell exceeds the threshold, the terminal reports the cell virtual set to the radio network controller.

D. A predefined report condition. The predefined report condition may be as follows: (a) Inter-system or inter-frequency cells are added to the virtual set; or (b) Reporting periodically, reporting once at a certain interval, and the like.

When any one of the foregoing A, B, C, and D is met, the terminal reports the cell virtual set to a network side device, for example, the radio network controller.
After receiving the cell virtual set, the radio network controller (RNC, Radio Network Controller) can use the cell virtual set as a reference for establishing an active set by the RNC when the terminal is handed over to the Cell DCH state. The terminal in the Cell DCH state maintains communications with multiple cells at the same time. A set of these cells that maintain communications with the terminal is called an active set. After receiving the cell virtual set reported by the terminal, the RNC knows that there are four cells in the cell virtual set, including one serving cell A and three neighboring cells B, C, and D. If the RNC decides to hand over the terminal from the Cell FACH state to the Cell DCH state, the RNC needs to establish an active set for the terminal; and the RNC uses the cells in the cell virtual set as cells for establishing the active set and provides these cells to the terminal for use.
When the terminal leaves the Cell FACH state and is handed over to the Cell DCH state or after the terminal releases the uplink connection in the Cell FACH state, the terminal clears the cell virtual set.
Actually, reporting the cell virtual set may be independent of the process of cell reselection. After the terminal establishes a cell virtual set in the Cell FACH state, the terminal can report the cell virtual set to the network side as a reference for the network side to hand over from the Cell FACH state to the Cell DCH state.

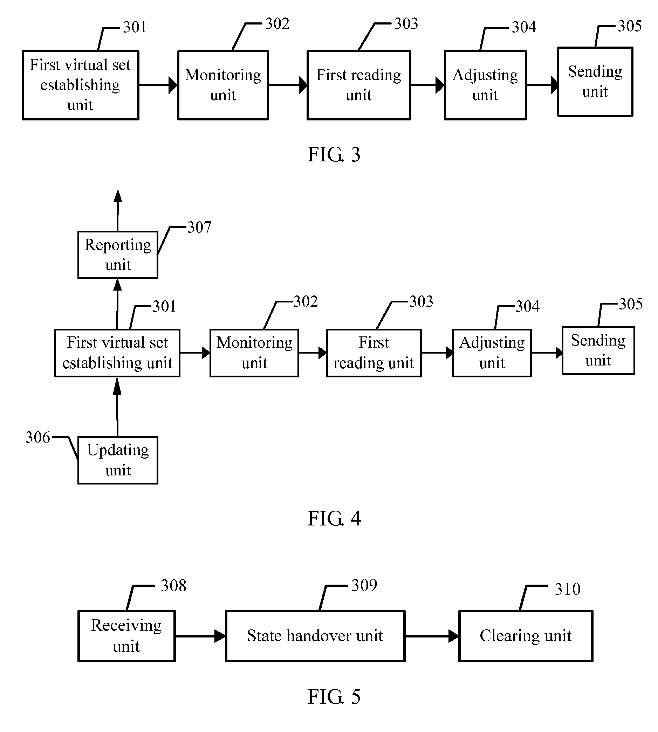

FIG. 3 is a schematic structural diagram of a terminal according to another embodiment of the present invention. The terminal includes a first virtual set establishing unit 301, a monitoring unit 302, a first reading unit 303, an adjusting unit 304, and a sending unit 305.
The first virtual set establishing unit 301 is configured to establish a cell virtual set directly or according to signal metric values of neighboring cells in a cell forward access channel state.
The monitoring unit 302 is configured to monitor a common relative grant channel of non-serving cells in the cell virtual set established by the first virtual set establishing unit 301.
The first reading unit 303 is configured to read instruction information in the common relative grant channel monitored by the monitoring unit 302.
The adjusting unit 304 is configured to adjust power for sending data to be sent according to the instruction information read by the first reading unit 303.
The sending unit 305 is configured to send the data to be sent by using the power adjusted by the adjusting unit 304.
In the embodiment of the present invention, the first virtual set establishing unit 301 establishes a cell virtual set directly or according to signal metric values of neighboring cells in a cell forward access channel state; the monitoring unit 302 monitors a common relative grant channel of non-serving cells in the cell virtual set established by the first virtual set establishing unit 301; the first reading unit 303 reads instruction information in the common relative grant channel monitored by the monitoring unit 302; the adjusting unit 304 adjusts power for sending data to be sent according to the instruction information read by the first reading unit 303; and the sending unit 305 sends the data to be sent by using the power adjusted by the adjusting unit 304. Compared with the prior art, the terminal provided in the embodiment of the present invention can avoid interference that the terminal imposes on neighboring cells.
In the foregoing embodiment corresponding to FIG. 3:
The first virtual set establishing unit 301 is configured to add all measured cells to the cell virtual set when no preset quantity is configured for the cell virtual set or a preset quantity configured for the cell virtual set is greater than or equal to the quantity of measured cells.

The first virtual set establishing unit 301 is configured to compare signal metric values of neighboring cells with a preset threshold and add a serving cell and neighboring cells whose signal metric values are greater than the preset threshold to the cell virtual set.

The first virtual set establishing unit 301 is configured to sort neighboring cells according to the signal metric values when the preset quantity configured for the cell virtual set is smaller than the quantity of measured cells and add the serving cell and neighboring cells with the greatest signal metric values to the cell virtual set, where the quantity of neighboring cells is smaller than the preset quantity.

FIG. 4 is a schematic structural diagram of a terminal according to another embodiment of the present invention. The terminal further includes an updating unit 306 and a reporting unit 307.

The updating unit 306 is configured to update a cell virtual set according to update rules.

The updating unit 306 is configured to: when a signal metric value of a first cell outside the cell virtual set is always greater than a preset threshold within a preset time or a signal metric value of a first cell outside the cell virtual set is always greater than a weighted average value of cells in the virtual set within a preset time, add the first cell to the virtual set; or

when a second cell in the cell virtual set is always smaller than the preset threshold within a preset time, or a second cell in the cell virtual set is always smaller than a weighted average value of cells in the virtual set within a preset time, delete the second cell smaller than the preset threshold from the virtual set.

The updating unit 306 is configured to: when cells in the cell virtual set reaches a preset quantity, if a signal metric value of a first cell outside the cell virtual set is always greater than a signal metric value of a second cell in the cell virtual set within a preset time, replace the second cell in the virtual set with the first cell.

The reporting unit 307 is configured to report the virtual cell set to a network side when a report condition is met, where the report condition being met includes at least one of the following: any message is sent to the network side, a virtual set report request is received from the network side, an interference level of any one cell in the virtual set reaches a specified interference level value, and a pre-defined report condition is met.

FIG. 5 is a schematic structural diagram of a terminal according to another embodiment of the present invention. The terminal further includes a receiving unit 308, a state transition unit 309, and a clearing unit 310.

The receiving unit 308 is configured to receive a state transition instruction from a network side.

The state transition unit 309 is configured to leave a cell forward access channel state or release an uplink connection after the receiving unit 308 receives the state transition instruction.

The clearing unit 310 is configured to clear the cell virtual set after the state transition unit 309 finishes performing the state transition.

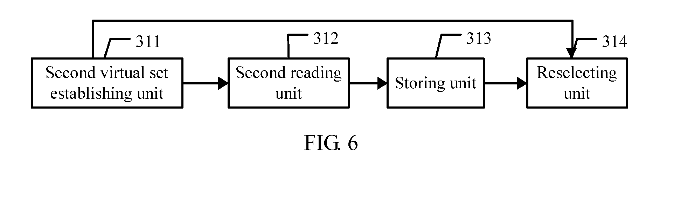

FIG. 6 is a schematic structural diagram of a terminal according to another embodiment of the present invention. The terminal includes:

a second virtual set establishing unit 311, configured to establish a cell virtual set directly or according to signal metric values of neighboring cells in a cell forward access channel state;

a second reading unit 312, configured to read system information broadcasts of cells in the cell virtual set established by the second virtual set establishing unit 311;

a storing unit 313, configured to store the system information broadcasts read by the second reading unit 312; and

a reselecting unit 314, configured to perform cell reselection according to the cell virtual set established by the second virtual set establishing unit 311 and the system information broadcast stored by the storing unit 313.

In the embodiment of the present invention, the second virtual set establishing unit 311 establishes a cell virtual set directly or according to signal metric values of neighboring cells in a cell forward access channel state; the second reading unit 312 reads a system information broadcast of cells in the cell virtual set established by the second virtual set establishing unit 311; the storing unit 313 stores the system information broadcast read by the second reading unit 312; and the reselecting unit 314 performs cell reselection according to the cell virtual set established by the second virtual set establishing unit 311 and the system information broadcast stored by the storing unit 313. By using the terminal provided in the embodiment of the present invention, interference that the terminal imposes on neighboring cells can be avoided, and cell reselection can be sped up.

It can be clearly understood by persons skilled in the art that, for the purpose of convenient and brief description, division of the foregoing function modules is taken as an example for illustration, in actual implementation, the foregoing functions can be allocated to different modules for implementation according to the need, that is, inner structure of the apparatus is divided into different function modules to implement all or part of the functions described above. For a detailed working process of the foregoing system, apparatus and unit, reference may be made to the corresponding process in the method embodiments, and the details will not be described herein again.

In the several embodiments provided in the present application, it should be understood that the disclosed system, apparatus, and method may be implemented in other manners. For example, the described apparatus embodiment is merely exemplary. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in the form of hardware, or may be implemented in the form of a software functional unit.

When the integrated unit are implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, or a network device or the like) or a processor (processor) to perform all or a part of steps of the methods described in the embodiments of the present invention. The storage medium includes any medium that can store program codes, such as a USB flash disk, a removable hard disk, a read-only memory (ROM, Read-Only Memory), a random access memory (RAM, Random Access Memory), a magnetic disk, or an optical disk.

It should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the embodiments, or make equivalent replacements to some technical features in the technical solutions thereof, without departing from the spirit and scope of the technical solutions of the embodiments of the present invention.

**Claims**

1. A method for sending data, comprising:

   establishing a cell virtual set directly or according to signal metric values of neighboring cells in a cell forward access channel state, wherein the cell virtual set comprises at least a serving cell;
   monitoring a common relative grant channel of a non-serving cell in the cell virtual set, and reading instruction information in the common relative grant channel; and
   adjusting, according to the read instruction information, power for sending data to be sent, and sending the data to be sent by using the adjusted power.

2. The method according to claim 1, wherein the establishing the cell virtual set directly comprises:

   adding all measured cells to the cell virtual set when no preset quantity is configured for the cell virtual set or a preset quantity configured for the cell virtual set is greater than or equal to a quantity of measured cells.

3. The method according to claim 1, wherein the establishing the cell virtual set according to the signal metric values of the neighboring cells comprises:

   comparing the signal metric values of the neighboring cells with a preset threshold; and
   adding the serving cell and a neighboring cell whose signal metric value is greater than the preset threshold to the cell virtual set.

4. The method according to claim 1, wherein the establishing the cell virtual set according to the signal metric values of the neighboring cells comprises:

sorting the neighboring cells according to the signal metric values when a preset quantity configured for the cell virtual set is smaller than aquantity of measured cells; and
adding the serving cell and neighboring cells with the greatest signal metric values to the cell virtual set, wherein the quantity of neighboring cells is smaller than the preset quantity.

5. The method according to claim 3, wherein after the establishing the cell virtual set, the method further comprises:

updating the cell virtual set according to update rules, wherein:

the updating the cell virtual set according to update rules comprises:

adding a first cell to the virtual set when a signal metric value of the first cell outside the cell virtual set is always greater than the preset threshold within a preset time or a signal metric value of the first cell outside the cell virtual set is always greater than a weighted average value of cells in the virtual set within a preset time; or
deleting a second cell smaller than the preset threshold from the virtual set when the second cell in the cell virtual set is always smaller than the preset threshold within a preset time, or the second cell in the cell virtual set is always smaller than a weighted average value of cells in the virtual set within a preset time.

6. The method according to claim 2 or 4, wherein after the establishing the cell virtual set, the method further comprises:

updating the cell virtual set according to update rules, wherein:

the updating the cell virtual set according to update rules comprises:

replacing a second cell in the virtual set with a first cell when the quantity of cells in the cell virtual set reaches a preset quantity, if a signal metric value of the first cell outside the cell virtual set is always greater than a signal metric value of the second cell in the cell virtual set within a preset time.

7. The method according to any one of claims 1 to 4, further comprising:

reporting the cell virtual set to a network side when a report condition is met.

8. The method according to claim 7, wherein the report condition being met comprises at least one of the following: any message is sent to the network side, a cell virtual set report request is received from the network side, an interference level of any one cell in the virtual set reaches a specified interference level value, and a pre-defined report condition is met.

9. The method according to claim 7, further comprising:

receiving a state transition instruction from the network side, and leaving a cell forward access channel state or releasing an uplink connection; and
clearing the cell virtual set.

10. A method for cell reselection, comprising:

establishing a cell virtual set directly or according to signal metric values of neighboring cells in a cell forward access channel state, wherein the cell virtual set comprises at least a serving cell;
reading system information broadcasts of cells in the cell virtual set, and storing the system information broadcasts; and
performing cell reselection according to the cell virtual set and the stored system information broadcasts of the cells in the cell virtual set.

11. The method according to claim 10, wherein the performing cell reselection according to the cell virtual set and the stored system information broadcasts of the cells in the cell virtual set comprises:

using cells in the virtual set as candidate cells of a reselected target cell; when the system information broadcasts indicate that there are reserved cells or barred cells in the virtual set, excluding the reserved cells or barred cells during reselection according to the indication of the system information broadcasts.

12. The method according to claim 10, wherein the establishing a cell virtual set directly comprises:

when no preset quantity is configured for the cell virtual set or a preset quantity configured for the cell virtual set is greater than or equal to the quantity of measured cells, adding all measured cells to the cell virtual set.

13. The method according to claim 10, wherein the establishing a cell virtual set according to signal metric values of neighboring cells comprises:

comparing signal metric values of neighboring cells with a preset threshold; and
adding the serving cell and neighboring cells whose signal metric values are greater than the preset threshold to the cell virtual set.

14. The method according to claim 11, wherein the establishing a cell virtual set according to signal metric values of neighboring cells comprises:

when a preset quantity configured for the cell virtual set is smaller than the quantity of measured cells, ranking the neighboring cells according to the signal metric values; and
adding the serving cell and neighboring cells with the greatest signal metric values to the cell virtual set, wherein the quantity of neighboring cells is smaller than the preset quantity.

15. The method according to any one of claim 13, wherein after the establishing a cell virtual set, the method further comprises:

updating the cell virtual set according to update rules, wherein:

the updating the cell virtual set according to update rules comprises:

when a signal metric value of a first cell outside the cell virtual set is always greater than the preset threshold within a preset time or a signal metric value of a first cell outside the cell virtual set is always greater than a weighted average value of cells in the virtual set within a preset time, adding the first cell to the virtual set; or
when a second cell in the cell virtual set is always smaller than the preset threshold within a preset time, or a second cell in the cell virtual set is always smaller than a weighted average value of cells in the virtual set within a preset time, deleting the second cell smaller than the preset threshold from the virtual set.

16. The method according to claim 12 or 14, wherein after the establishing a cell virtual set, the method further comprises:

updating the cell virtual set according to update rules, wherein:

the updating the cell virtual set according to update rules comprises:

when the quantity of cells in the cell virtual set reaches a preset quantity, if a signal metric value of a first cell outside the cell virtual set is always greater than a signal metric value of a second cell in the cell virtual set within a preset time, replacing the second cell in the virtual set with the first cell.

17. The method according to any one of claims 10 to 14, further comprising:

updating the stored system information broadcasts periodically.

18. The method according to any one of claims 10 to 14, further comprising:

removing the barred cells or reserved cells in the cell virtual set from the virtual set according to the indication of the system information broadcasts, or setting an access barred flag for the barred cells or reserved cells in the cell virtual set.

19. The method according to any one of claims 10 to 14, further comprising:

when a report condition is met, reporting the cell virtual set to a network side.

20. The method according to claim 19, wherein the report condition being met comprises at least one of the following: any message is sent to the network side, a cell virtual set report request is received from the network side, an interference level of any one cell in the virtual set reaches a specified interference level value, and a pre-defined report condition is met.

21. The method according to any one of claim 19, further comprising:

receiving a state transition instruction from the network side, and leaving a cell forward access channel state or releasing an uplink connection; and
clearing the cell virtual set.

22. A terminal, comprising:

a first virtual set establishing unit, configured to establish a cell virtual set directly or according to signal metric values of neighboring cells in a cell forward access channel state;
a monitoring unit, configured to monitor a common relative grant channel of non-serving cells in the cell virtual set established by the first virtual set establishing unit;
a first reading unit, configured to read instruction information in the common relative grant channel monitored by the monitoring unit;
an adjusting unit, configured to adjust power for sending data to be sent according to the instruction information read by the first reading unit; and
a sending unit, configured to send the data to be sent by using the power adjusted by the adjusting unit.

23. The terminal according to claim 22, further comprising:

an updating unit, configured to update the cell virtual set established by the first virtual set establishing unit according to update rules.

24. The terminal according to claim 22 or 23, further comprising:

a reporting unit, configured to report the virtual cell set to a network side when a report condition is met, wherein the report condition being met comprises at least one of the following: any message is sent to the network side, a virtual set report request is received from the network side, an interference level of any one cell in the virtual set reaches a specified interference level value, and a pre-defined report condition is met.

25. The terminal according to claim 24, further comprising:

a receiving unit, configured to receive a state transition instruction from the network side;
a state transition unit, configured to leave a cell forward access channel state or release an uplink connection after the receiving unit receives the state transition instruction; and
a clearing unit, configured to clear the cell virtual set after the state transition unit performs the state transition.

26. A terminal, comprising:

a second virtual set establishing unit, configured to establish a cell virtual set directly or according to signal metric values of neighboring cells in a cell forward access channel state;
a second reading unit, configured to read system information broadcasts of cells in the cell virtual set established by the second virtual set establishing unit;
a storing unit, configured to store the system information broadcasts read by the second reading unit; and
a reselecting unit, configured to perform cell reselection according to the cell virtual set established by the second virtual set establishing unit and the system information broadcasts stored by the storing unit.

A terminal establishes a cell virtual set directly or according to signal metric values of neighbor cells in a cell forward access channel state — 101

The terminal monitors a common relative grant channel of non-serving cells in the cell virtual set, and reads instruction information in the common relative grant channel — 102

The terminal adjusts, according to the read instruction information, power for sending data to be sent, and sends the data to be sent by using the adjusted power — 103

FIG. 1

A terminal establishes a cell virtual set directly or according to signal metric values of neighbor cells in a cell forward access channel state — 201

The terminal reads system information of cells in the cell virtual set, and stores the system information — 202

Perform cell reselection according to the cell virtual set and the stored the system information of the cells in the cell virtual set — 203

FIG. 2

| First virtual set establishing unit ⌐301 | → | Monitoring unit ⌐302 | → | First reading unit ⌐303 | → | Adjusting unit ⌐304 | → | Sending unit ⌐305 |

FIG. 3

Reporting unit ⌐307

↑

First virtual set establishing unit ⌐301 → Monitoring unit ⌐302 → First reading unit ⌐303 → Adjusting unit ⌐304 → Sending unit ⌐305

306⌐ Updating unit

FIG. 4

| Receiving unit ⌐308 | → | State handover unit ⌐309 | → | Clearing unit ⌐310 |

FIG. 5

311 312 313 314

| Second virtual set establishing unit | → | Second reading unit | → | Storing unit | → | Reselecting unit |

FIG. 6

## INTERNATIONAL SEARCH REPORT

| International application No. |
|---|
| PCT/CN2012/084498 |

**A. CLASSIFICATION OF SUBJECT MATTER**

H04W 36/00 (2009.01) i

According to International Patent Classification (IPC) or to both national classification and IPC

**B. FIELDS SEARCHED**

Minimum documentation searched (classification system followed by classification symbols)

IPC: H04W 36/-

Documentation searched other than minimum documentation to the extent that such documents are included in the fields searched

Electronic data base consulted during the international search (name of data base and, where practicable, search terms used)

CNABS, CPRSANS, CNTXT, DWPI, SIPOABS: forward access channel, FACH, server, neighbor, cell, virtual, set, relative grant channel, RGCH, interfere, reselect, obligate, forbid, remove, exclude

**C. DOCUMENTS CONSIDERED TO BE RELEVANT**

| Category* | Citation of document, with indication, where appropriate, of the relevant passages | Relevant to claim No. |
|---|---|---|
| A | CN 101409925 A (NTT DOCOMO INC) 15 April 2009 (15.04.2009) description, page 9, line 15 to page 11, line 26 | 1-9, 22-25 |
| A | CN 1984477 A (HUAWEI TECHNOLOGIES CO., LTD.) 20 June 2007 (20.06.2007) description, page 6, line 15 to page 8, line 13 and figure 1 | 10-21, 26 |
| A | CN 101553013 A (ZTE CORP) 07 October 2009 (07.10.2009) the whole document | 10-21, 26 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 25 January 2013 (25.01.2013) | 28 February 2013 (28.02.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>JIANG, Ling<br><br>Telephone No. (86-10) 62411318 |

Form PCT/ISA /210 (second sheet) (July 2009)

## INTERNATIONAL SEARCH REPORT
Information on patent family members

| | International application No. |
|---|---|
| | PCT/CN2012/084498 |

| Patent Documents referred in the Report | Publication Date | Patent Family | Publication Date |
|---|---|---|---|
| CN 101409925 A | 15.04.2009 | US 2009092120 A1 | 09.04.2009 |
| | | EP 2048911 A1 | 15.04.2009 |
| | | JP 2009094804 A | 30.04.2009 |
| | | KR 20090036518 A | 14.04.2009 |
| | | KR 1010231 B1 | 21.01.2011 |
| | | JP 5090843 B2 | 05.12.2012 |
| CN 1984477 A | 20.06.2007 | None | |
| CN 101553013 A | 07.10.2009 | None | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210023347